# EUROPÄISCHE PATENTSCHRIFT

(11) **EP 4 355 188 B1**
(45) Veröffentlichungstag und Bekanntmachung des Hinweises auf die Patenterteilung: **13.05.2026**
(21) Anmeldenummer: 22730254.4
(22) Anmeldetag: 24.05.2022
(51) Int. Cl.: G05D 1/242, G05D 1/245, G05D 1/622, G05D 1/648, G05D 105/10, G05D 105/80, G05D 107/40, G05D 109/10, G05D 111/10, G05D 1/246, A47L 9/28

(54) **VERFAHREN ZUR AUTONOMEN BEARBEITUNG VON BODENFLÄCHEN**
METHOD FOR THE AUTONOMOUS CULTIVATION OF SOIL SURFACES
PROCÉDÉ DE TRAITEMENT AUTONOME DES SURFACES AU SOL

(30) Priorität: 16.06.2021 DE 102021206130
(43) Veröffentlichungstag der Anmeldung: 24.04.2024
(73) Patentinhaber: BSH Hausgeräte GmbH, 81739 München (DE)
(72) Erfinder: DANIEL, Kristina, 97616 Bad Neustadt (DE); SCHMITT, Kai, 97633 Saal (DE); SCHNITZER, Frank, 97616 Bad Neustadt (DE)
(86) Internationale Anmeldenummer: PCT/EP2022/064031
(87) Internationale Veröffentlichungsnummer: WO 2022/263123

(56) Entgegenhaltungen:
- WO-A1-2019/004742
- KR-A- 20200 094 816
- US-A1- 2020 125 113

## Beschreibung

Die Erfindung betrifft ein Verfahren zur autonomen Bearbeitung von Bodenflächen mit Hilfe eines mobilen, selbstfahrenden Geräts, insbesondere Bodenreinigungsgeräts wie ein Saug- und/oder Kehr- und/oder Wischroboter. Zudem betrifft die Erfindung ein mobiles, selbstfahrendes Gerät, mit dem eine derartige Bearbeitung durchführbar ist.

Mobile, selbstfahrende Geräte wie beispielsweise Saugroboter haben die Aufgabe, autonom möglichst eine gesamte Bodenfläche zu reinigen. Hindernisse, wie etwa Möbel, Einrichtungsgegenstände, kleine Objekte oder Türschwellen verhindern jedoch, dass der Saugroboter alle Bereiche des Bodens erreichen kann. Bekannte Saugroboter versuchen Schwellen und Hindernisse zu überwinden, wenn diese auf ihrem Bewegungspfad liegen. Zu große Hindernisse werden in der Regel durch die in Bewegungsrichtung angebrachten Bumpersensoren erfasst. Kleine Hindernisse können vom Saugroboter überfahren werden. Ab einer bestimmten Höhe des Hindernisses fehlt dem Saugroboter jedoch die Fähigkeit, sich über dieses zu schieben. Nach einigen Versuchen registriert der Saugroboter, dass er das Hindernis nicht überwinden kann und versucht anschließend die Stelle zu meiden, wobei es hierbei sein kann, dass bereits eine Beschädigung des entsprechenden Hindernisses stattgefunden hat.

Entsprechend den Fähigkeiten des Saugroboters kann dieser niedrige Schwellen überwinden, indem er diese passiert. Beispielsweise können Türschwellen überfahren werden, um den Reinigungsauftrag fortzusetzen. Diese sind in der Regel mit genügend Schwung für den Saugroboter überwindbar. Andere Schwellen wie beispielsweise ebenerdige Querstreben an Möbeln wie Schwingstühle oder Füße von Wäscheständern sind für den Saugroboter nicht überfahrbar. Diese muss der Saugroboter umfahren. Schwellen mit einem schmalen Profil bergen das Risiko, dass der Saugroboter nach dem Auffahren festhängt und sich nicht mehr aus der Situation befreien kann. Besonders bei Möbelstücken mit hochwertigen Oberflächen, beispielsweise verchromte, lackierte Oberflächen oder Oberflächen aus Glas, können Befreiungsversuche des Saugroboters nachteilig zu Schäden an der Oberfläche führen. Auch können bei Befreiungsversuchen des Saugroboters störende und unangenehme Geräusche entstehen, die das qualitative Empfinden des Nutzers beeinträchtigen.

Saugroboter, die Hindernisse ihrer Umgebung detektieren und u.a. klassifizieren, sind beispielsweise aus den Druckschriften WO 2019/004742 A1, KR 2020 0094816 A und US 2020/125113 A1 bekannt.

Aufgabe der Erfindung ist es, ein effektives, optimiertes und/oder nicht schädigendes Verfahren zur autonomen Bearbeitung von Bodenflächen bereitzustellen, bei dem insbesondere eine möglichst vollständige Reinigung der Bodenfläche gewährleistet wird, wobei gleichzeitig eine Beschädigung von Hindernissen durch das mobile, selbstfahrende Gerät vermieden wird.

Diese Aufgabe wird durch ein Verfahren zum Bearbeiten von Bodenflächen mit den Merkmalen des Anspruchs 1 und durch ein mobiles, selbstfahrendes Gerät mit den Merkmalen des Anspruchs 9 gelöst. Vorteilhafte Ausgestaltungen und Weiterbildungen sind Gegenstand der Unteransprüche.

Erfindungsgemäß umfasst ein Verfahren zur autonomen Bearbeitung von Bodenflächen mit Hilfe eines mobilen, selbstfahrenden Geräts, insbesondere Bodenreinigungsgeräts wie ein Saug- und/oder Kehr- und/oder Wischroboter, folgende Verfahrensschritte:
- Durchführen einer Explorationsfahrt des mobilen, selbstfahrenden Geräts in einem vorgesehenen Bodenbearbeitungsbereich zum Erstellen einer Umgebungskarte,
- Detektieren von Hindernissen mittels einer Detektionseinrichtung, wobei das mobile, selbstfahrende Gerät eine Position detektierter Hindernisse in der Umgebungskarte bestimmt,
- Klassifizieren der Hindernisse als passierbar oder nicht passierbar, und
- Überfahren eines als passierbar klassifizierten Hindernisses und/oder Umfahren eines als nicht passierbar klassifizierten Hindernisses, wobei türnahe Hindernisse als Türschwelle und türferne Hindernisse als Möbel klassifiziert werden.

Die erfindungsgemäße Lösung zeichnet sich dadurch aus, erkannte Hindernisse auf Basis ihrer Position in der Umgebungskarte zu klassifizieren und als überwindbar einzustufen, falls diese sich in einem Bereich eines Durchgangs befinden. Andere Hindernisse werden als nicht überwindbar klassifiziert und vom mobilen, selbstfahrenden Gerät umfahren, bevor dieser einen Versuch des Überfahrens startet. So können Beschädigungen an diesen Hindernissen mit Vorteil von vornherein vermieden werden. Das mobile, selbstfahrende Gerät schätzt also bereits vor dem Versuch des Überfahrens des erkannten Hindernisses ein, ob dieses Hindernis überwindbar ist. Hierbei nimmt das mobile, selbstfahrende Gerät eine Klassifizierung der Hindernisse anhand vorhandener Kartendaten der Umgebungskarte vor. Insbesondere identifiziert das mobile, selbstfahrende Gerät ein Hindernis bereits vor dem Befahren, gleicht dieses mit Informationen aus bekannten Kartendaten ab, stuft es als passierbar oder nicht passierbar ein und reagiert entsprechend darauf, indem das Gerät als passierbar klassifizierte Hindernisse überfährt und/oder als nicht passierbar klassifizierte Hindernisse umfährt.

Durch die erfindungsgemäße Lösung verringert sich mit Vorteil das Risiko für das mobile, selbstfahrende Gerät, sich auf flachen Hindernissen wie ebenerdige Stuhlverstrebungen festzufahren. Ebenso verringert sich die Gefahr, hochwertige Möbel zu beschädigen. Zudem verringern sich die Gebrauchsspuren am mobilen, selbstfahrenden Gerät aufgrund des reduzierten Kontakts zu den Möbeln. Vorteilhafterweise entsteht eine geringe Geräuschentwicklung während des Reinigungsvorgangs, da das Gerät nun nicht mehr mit beispielsweise maximaler Geschwindigkeit gegen flache Hindernisse knallt oder auf diese auffährt und sich festhängt, wobei Räder des Geräts über das Hindernis rattern. Durch die reduzierte Gefahr des Festfahrens des Geräts kann der Reinigungsauftrag meist mit Vorteil ohne Nutzereingriff beendet werden. Die Gefahr eines Abbruchs der Reinigung reduziert sich mit Vorteil. Auch kann die Reinigungszeit gesenkt werden, da das Gerät keine Zeit mit Überwindungsversuchen von Hindernissen verliert.

Unter einem mobilen, selbstfahrenden Gerät ist insbesondere ein Bodenreinigungsgerät, beispielsweise Reinigungs- oder Rasenmähergerät, zu verstehen, welche insbesondere im Haushaltsbereich Bodenflächen oder Rasenflächen autonom bearbeiten. Hierunter zählen unter anderem Saug- und/oder Kehr- und/oder Wischroboter wie beispielsweise Staubsaugerroboter, oder Rasenmäherroboter. Diese Geräte arbeiten im Betrieb (Reinigungsbetrieb oder Rasenmäherbetrieb) bevorzugt ohne oder mit möglichst wenig Benutzereingriff. Beispielsweise verfährt das Gerät selbsttätig in einem vorgegebenen Raum, um entsprechend einer vorgegebenen und einprogrammierten Verfahrensstrategie den Boden ab zu reinigen.

Unter einer Explorationsfahrt ist insbesondere eine Erkundungsfahrt zu verstehen, die dazu geeignet ist, eine zu bearbeitende Bodenfläche nach Hindernissen, Raumaufteilung und ähnliches zu erkunden. Ziel einer Explorationsfahrt ist es insbesondere, Gegebenheiten des zu bearbeitenden Bodenbearbeitungsbereich einschätzen und/oder darstellen zu können.

Unter einem Bodenbearbeitungsbereich ist jeglicher räumliche Bereich zu verstehen, der zur Bearbeitung, insbesondere Reinigung vorgesehen ist. Das kann beispielsweise ein einzelner (Wohn-) Raum oder eine ganze Wohnung sein. Auch lediglich Bereiche eines (Wohn-) Raums oder einer Wohnung, die zur Reinigung vorgesehen sind, können darunter verstanden werden.

Unter Hindernissen sind jegliche Objekte und/oder Gegenstände zu verstehen, die im Bodenbearbeitungsbereich angeordnet sind, beispielsweise dort liegen, und die Bearbeitung durch das mobile, selbstfahrende Gerät beeinflussen, insbesondere behindern und/oder stören wie beispielsweise Schwellen, Türschwellen, Möbel, Wände, Vorhänge, Teppiche und ähnliches.

Unter passierbaren Hindernissen sind insbesondere Hindernisse zu verstehen, die das mobile, selbstfahrende Gerät aufgrund ihrer geringen Höhe überfahren kann, ohne daran festzuhängen oder aufzufahren. Beispielsweise können Türschwellen oder Teppiche als passierbare Hindernisse eingestuft werden.

Unter nicht passierbaren Hindernissen sind dementsprechend Hindernisse zu verstehen, die das mobile, selbstfahrende Gerät aufgrund ihrer Höhe nicht überfahren kann, also dagegen fahren würde, oder sich daran festfahren würde, sodass der Reinigungsvorgang unterbrochen wäre.

Nach der Explorationsfahrt kennt das mobile, selbstfahrende Gerät seine Umgebung und kann diese in Form einer Umgebungskarte an den Nutzer weitergeben, zum Beispiel in einer App an einem Mobilgerät. Die detektierten passierbaren und nicht passierbaren Hindernisse werden vorzugsweise in der Umgebungskarte angezeigt. Besonders bevorzugt werden die detektierten Hindernisse je nach ihrer Klassifizierung entsprechend angezeigt. Beispielsweise werden als passierbar klassifizierte Hindernisse in einer anderen Farbe, Form oder ähnliches dargestellt wie die als nicht passierbar klassifizierten Hindernisse.

Unter einer Umgebungskarte ist insbesondere jegliche Karte zu verstehen, die geeignet ist, die Umgebung des Bodenbearbeitungsbereichs mit all seinen Hindernissen darzustellen. Beispielsweise zeigt die Umgebungskarte den Bodenbearbeitungsbereich mit den darin enthaltenen Hindernissen und Wänden skizzenartig an.

Die Umgebungskarte mit den Hindernissen werden vorzugsweise in der App an einem tragbaren Zusatzgerät dargestellt. Dies dient insbesondere der Visualisierung zu einer möglichen Interaktion für den Nutzer.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist insbesondere die App, insbesondere eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder des zu reinigenden Wohnbereichs ermöglicht. Die App zeigt dem Nutzer dabei vorzugsweise den zu reinigenden Bereich als Umgebungskarte sowie jegliche Hindernisse an.

Unter einer Detektionseinrichtung ist jegliche Einrichtung zu verstehen, die dazu geeignet ist, passierbare und nicht passierbare Hindernisse bevorzugt zuverlässig zu detektieren. Diese ist vorzugsweise laserbasiert, sensorbasiert und/oder kamerabasiert.

Unter dem Klassifizieren ist insbesondere ein Einteilen der Hindernisse und/oder Objekte und/oder Gegenstände in passierbar oder nicht passierbar zu verstehen. Zusätzlich können weitere Klassifizierungen durchgeführt werden, wie beispielsweise in ebene und unebene Hindernisse, oder ähnliches.

Bei einer vorteilhaften Ausführungsform erfolgt das Klassifizieren der Hindernisse anhand vorhandener, durch die Explorationsfahrt erhaltene Kartendaten. Insbesondere werden die erkannten Hindernisse mit Informationen aus der Umgebungskarte abgeglichen, um sie entsprechend zu klassifizieren beziehungsweise einzuschätzen. Vorzugsweise erfolgt das Klassifizieren durch ein Abgleichen von Informationen aus der Explorationsfahrt mit erhaltenen Informationen bei dem Detektieren des Hindernisses. Besonders bevorzugt identifiziert das mobile, selbstfahrende Gerät zum Klassifizieren basierend auf Informationen aus seiner Explorationsfahrt selbsttätig Räume als solche.

Beispielsweise liegt dem mobilen, selbstfahrenden Gerät von der Explorationsfahrt die Umgebungskarte seiner Umgebung vor. Aufgrund der Geometrie kann das Gerät selbst einschätzen, welche Bereiche in der Realität Räumen entsprechen. Verengte Bereiche, die in der Umgebungskarte zwischen benachbarten Räumen liegen, werden als Türen beziehungsweise Türschwellen identifiziert und demnach als passierbar eingestuft.

Alternativ ist es möglich, dass der Nutzer über seine App auf dem tragbaren Zusatzgerät selbst vorgibt, welche Flächen oder Bereiche der Umgebungskarte welchen Räumen seiner Wohnung entsprechen. Auch hier können vom Gerät selbsttätig verengte Bereiche zwischen benachbarten Räumen als Türen oder Türschwellen identifiziert und demnach als passierbar eingestuft werden.

Bei einer vorteilhaften Ausführungsform erfolgt das Klassifizieren der Hindernisse vor einem Versuch des Überfahrens des Hindernisses. Vorliegend wird also ein Versuch zum Überwinden des Hindernisses bei nicht passierbar klassifizierten Hindernissen nicht durchgeführt, um eventuelle Beschädigungen an den Hindernissen oder ein Festsitzen des mobilen, selbstfahrenden Geräts zu verhindern.

Erfindungsgemäß bestimmt das mobile, selbstfahrende Gerät eine Position detektierter Hindernisse in der Umgebungskarte. Insbesondere wird möglichst exakt bestimmt, wo sich das detektierte Hindernis in der Umgebungskarte befindet. Liegt das Hindernis in einem Bereich nahe einer Tür oder einem Raumübergang, so wird das Hindernis als Schwelle, insbesondere Tür- oder Raumschwelle klassifiziert, die überwunden werden kann. Liegt das erkannte Hindernis innerhalb eines Raumes, so ist davon auszugehen, dass es sich um ein Möbelstück handelt. Dieses wird bei der Reinigung vom mobilen, selbstfahrenden Gerät umfahren.

Insbesondere werden erfindungsgemäß also türnahe beziehungsweise wandnahe Hindernisse als Türschwelle und türferne beziehungsweise wandferne Hindernisse als Möbel klassifiziert, wobei türnahe Hindernisse überfahren und türferne Hindernisse umfahren werden, bevor ein Versuch des Überfahrens der türfernen Hindernisse durchgeführt wird.

Erfindungsgemäß umfasst ein mobiles, selbstfahrendes Gerät, insbesondere Bodenreinigungsgerät zur autonomen Bearbeitung von Bodenflächen wie ein Saugund/oder Kehr- und/oder Wischroboter eine Detektionseinheit zum Detektieren von Hindernissen und eine Auswerteeinheit zum Klassifizieren der Hindernisse als passierbar oder nicht passierbar. Insbesondere umfasst die Detektionseinheit Sensoren, die Entfernungsmesswerte und/oder zeitliche Änderungen von Sensorwerten bestimmen.

Jegliche Merkmale, Ausgestaltungen, Ausführungsformen und Vorteile das Verfahren betreffend finden auch in Zusammenhang mit dem erfindungsgemäßen mobilen, selbstfahrenden Gerät Anwendung, und umgekehrt.

Unter einer Auswerteeinheit ist insbesondere jegliche Einrichtung zu verstehen, die dazu geeignet ist, eine entsprechende Klassifizierung der Hindernisse und/oder Objekte als passierbar oder nicht passierbar durchführen zu können, insbesondere anhand der Position des Hindernisses in seiner Umgebung. Eine detailliertere Klassifizierung der Hindernisse ist nicht zwangsläufig notwendig, kann jedoch umgesetzt sein.

Um ein Hindernis zu erkennen, bevor das mobile, selbstfahrende Gerät auf dieses auffährt, kann Sensorik ähnlich den bekannten Cliffsensoren eingesetzt werden. Steigt deren Entfernungsmesswert an, so befindet sich das mobile, selbstfahrende Gerät an einem Abgrund oder wurde vom Nutzer hochgehoben. Sinkt der Messwert jedoch um einen bestimmten Wert ab, so handelt es sich um eine Schwelle.

Neben der Nutzung der im Gerät verbauten Cliffsensoren sind weiter Einbauformen einsetzbar, die ein sicheres Erkennen von Schwellen ermöglichen. Erhöhte Positionen und/oder schräge Einbaulagen der Sensoren gewährleisten ein Erkennen der Schwelle vor einer Berührung mit dem Gerät. Vorgelagerte, insbesondere federnd versenkbare Positionen ermöglichen ein Erkennen in geringer Entfernung.

Des Weiteren kann die zeitliche Änderung der Sensorwerte erfasst werden, um ein Unterscheiden zwischen flachen Hindernissen wie zum Beispiel ebenerdige Verstrebungen von Schwingstühlen, flache Füße von Tischen oder ähnliches, und Teppichen zu erreichen. Bei glatten Hindernissen kann im zeitlichen Verlauf der Sensorwerte eine kontinuierliche Profilform erkannt werden, wohingegen eine raue Struktur bei Teppichen unregelmäßige Sensorwerte liefert.

Alternativ kann das Hindernis durch einen zweiten Bumper auf der Höhe des Hindernisses in der Auffahrtschräge erkannt werden. Hierbei ist die Federkraft so gewählt, dass ein weiches Hindernis wie ein Teppich als solches erkannt und von einem Hindernis wie einer Stuhlstrebe unterschieden werden kann.

Durch die vorhandenen Kartendaten der Räume der Umgebungskarte wird eine Schwelle als solche zuverlässig erkannt, wobei das Gerät prüfen und klassifizieren kann, ob es sich um eine Türschwelle handelt oder um ein innerhalb des Raumes liegendes Hindernis. Türschwellen werden vom Gerät passiert, andere Hindernisse werden vom Gerät umfahren.

Die Erfindung wird anhand der nachfolgenden, lediglich Beispiele darstellenden Ausführungen der Erfindung näher erläutert. Es zeigen:
- Figur 1:: eine schematische Ansicht eines Ausführungsbeispiels einer Umgebungskarte, die bei dem Durchführen des erfindungsgemäßen Verfahrens zur automatischen Bearbeitung von Bodenflächen mit Hilfe eines mobilen, selbstfahrenden Geräts erstellt wird,
- Figur 2:: einen schematischen Ausschnitt aus der Umgebungskarte des Ausführungsbeispiels der Figur 1,
- Figuren 3A-3C:: einen schematischen Querschnitt eines Ausführungsbeispiels eines mobilen, selbstfahrenden Geräts während der Durchführung des erfindungsgemäßen Verfahrens zur automatischen Bearbeitung von Bodenflächen, und
- Figur 4:: ein schematisches Flussdiagramm zum Ablauf des erfindungsgemäßen Verfahrens zur automatischen Bearbeitung von Bodenflächen.

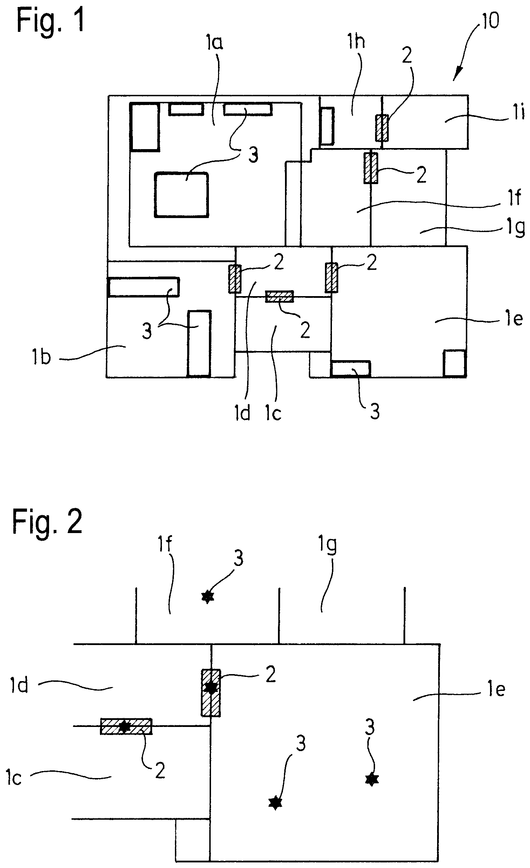

In Figur 1 ist eine Umgebungskarte 10 dargestellt, die von einem mobilen, selbstfahrenden Gerät, insbesondere einem Saugroboter, bei einer Explorationsfahrt erstellt worden ist. Bei der Explorationsfahrt werden alle Hindernisse wie beispielsweise Möbel, Türschwellen, Teppiche und herunterhängende Gardinen in einem vorbestimmten Bodenbearbeitungsbereich mit einer Detektionseinrichtung des Saugroboters detektiert. Aufgrund der Geometrie in der Umgebungskarte kann der Saugroboter selbst einschätzen, welche Bereiche in der Realität Räume entsprechen. Insbesondere entsprechen einzelne Abgrenzungen in der Umgebungskarte einzelnen Raumabschnitten und/oder einzelnen Räumen 1a - 1i.

Alternativ zum selbsttätigen Einordnen der Räume durch den Saugroboter kann der Nutzer über eine App beispielsweise an seinem Mobilgerät vorgeben, welche Abgrenzungen der Umgebungskarte welchen Räumen 1a - 1i seiner Wohnung entsprechen.

Neben den Räumen werden jegliche, sich in den Räumen befindende Hindernisse durch den Saugroboter detektiert. Dabei werden vom Saugroboter verengte Bereiche, die in der Umgebungskarte zwischen benachbarten Räumen liegen, als Türen und/oder Türbereiche und/oder Türschwellen eingestuft und von Hindernissen 3, die sich innerhalb eines Raumes befinden, abgegrenzt. Erkennt der Saugroboter also während seiner Fahrt vor sich ein Hindernis 2, 3, so kann er basierend auf der ihm bekannten Position in der Umgebungskarte 10 abgleichen, wo sich das Hindernis 2, 3 befindet. Liegt dieses in einem Bereich nahe einer Tür oder zwischen zwei angrenzenden Räumen, so wird das Hindernis 2 als Türschwelle klassifiziert, die überwunden beziehungsweise überfahren werden kann. Liegt das erkannte Hindernis 3 innerhalb eines Raumes, so wird dieses als Möbelstück klassifiziert. Dieses wird vom Saugroboter bei der Reinigungsarbeit umfahren. Ein Versuch des Überfahrens beziehungsweise Überwindens des Hindernisses 3 wird dabei nicht durchgeführt, um Beschädigungen und/oder ein Festsitzen des Saugroboters zu verhindern.

Insbesondere findet durch den Saugroboter also ein Klassifizieren der Hindernisse 2, 3 als passierbar oder nicht passierbar statt, abhängig von der Position des Hindernisses 2, 3 in der erstellten Umgebungskarte. Türnahe Hindernisse 2 werden dabei als Türschwelle und türferne Hindernisse 3 als Möbel klassifiziert. Als Ergebnis der Klassifizierung werden türnahe Hindernisse 2 überfahren und türferne Hindernisse 3 umfahren, bevor ein Versuch des Überfahrens der türfernen Hindernisse 3 durchgeführt wird. Nachfolgend der Klassifizierung der Hindernisse 2, 3 werden als passierbar klassifizierte Hindernisse 2 also überfahren und als nicht passierbar klassifizierte Hindernisse 3 umfahren.

Figur 2 zeigt einen Ausschnitt aus der Umgebungskarte 10 des Ausführungsbeispiels der Figur 1. Der Saugroboter hat in der Umgebungskarte einzelne Räume 1c bis 1g erkannt und diese entsprechend abgespeichert. Zwischen einzelnen Räumen 1d und 1e, 1c und 1d hat der Saugroboter Hindernisse 2 detektiert und diese aufgrund ihrer Zwischenraum-Position als Türschwelle klassifiziert. Diese türnahen oder wandnahen Hindernisse 2 können bei dem Reinigungsprogramm des Saugroboters überfahren werden, ohne dabei ein Beschädigen am Hindernis oder ein Festsitzen des Saugroboters zur Folge zu haben. Hindernisse 3, die sich aufgrund ihrer Position innerhalb eines Raumes befinden, werden als Möbelstücke klassifiziert. Diese türfernen oder wandfernen Hindernisse 3 werden bei dem Reinigungsprogramm des Saugroboters umfahren, ohne ein Überfahren zu versuchen, damit Beschädigungen am Hindernis 3 oder ein Festsitzen des Saugroboters unterbunden werden.

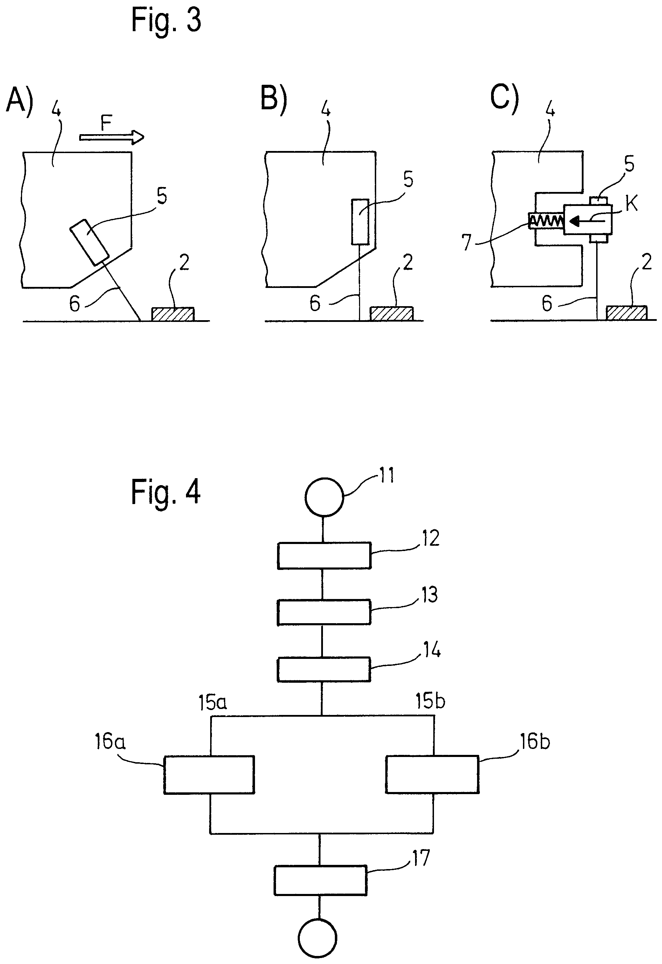

In Figur 3 ist eine Seitenansicht eines Saugroboters 4 dargestellt, der ein Hindernis 2 als Türschwelle detektiert und als solche klassifiziert. Um eine Türschwelle zu erkennen, bevor der Saugroboter 4 dieses berührt beziehungsweise auf dieses auffährt, umfasst der Saugroboter zumindest einen entfernungsmessenden Sensor 5, der ähnlich ist zu bekannten Cliffsensoren. Steigt deren Entfernungsmesswert an, so befindet sich der Saugroboter 4 an einem Abgrund oder wurde vom Nutzer hochgehoben. Sinkt der Entfernungsmesswert dagegen innerhalb eines definierten Bereichs um einen bestimmten Betrag ab, so wird eine Türschwelle als solche erkannt. Damit können Türschwellen erkannt werden, bevor der Saugroboter diese physisch berührt oder bevor er diese erreicht.

In Figur 3A ist der Saugroboter 4 in Fahrtrichtung F unterwegs und detektiert mit seinem entfernungsmessenden Sensor 5 Hindernisse entlang seines Laserstahls 6. Figur 3B zeigt eine alternative Anordnung des entfernungsmessenden Sensors 5 im Saugroboter 4. In Figur 3C findet eine vorgelagerte und federnd versenkbare Anordnung des Sensors 5 am Saugroboter 4 Anwendung, die eine Erkennung von Hindernissen auch in geringer Entfernung ermöglicht. Hierzu ist der Sensor 5 an einer Feder 7 befestigt. Die Feder 7 ist dabei in Richtung K einfahrbar, sodass der Sensor 5 im Saugroboter versenkbar ist, wodurch dieser im eingefahrenen Zustand vor Stößen und Beschädigungen geschützt ist.

Zusätzlich wird bevorzugt eine zeitliche Änderung der Entfernungsmesswerte des Sensors 5 erfasst, um ein Unterscheiden zwischen glatten Hindernissen, wie zum Beispiel ebenerdige Verstrebungen von Schwingstühlen oder flache Füße von Tischen, und rauen Hindernissen, wie beispielsweise Teppiche, zu ermöglichen. Bei glatten Hindernissen ergibt sich im zeitlichen Verlauf der Sensorwerte eine kontinuierliche Profilform, wohingegen durch eine raue Struktur unregelmäßige Sensorwerte geliefert werden.

Alternativ kann das zu detektierende Hindernis durch einen Bumper auf Höhe des Hindernisses in der Auffahrtsschräge detektiert werden (nicht dargestellt). Hierbei ist eine Federkraft des Bumpers so gewählt, dass ein weiches Hindernis wie beispielsweise ein Teppich als solches erkannt und von einem Hindernis wie zum Beispiel einer Stuhlquerstrebe unterscheidbar ist.

Ist eine Umgebungskarte mit erkannten Räumen vorhanden und wird eine Türschwelle als solche vom Saugroboter detektiert, so kann der Saugroboter prüfen und klassifizieren, ob es sich um eine Türschwelle oder um ein innerhalb des Raumes liegendes Hindernis handelt. Türschwellen werden vom Saugroboter passiert, andere Hindernisse werden vom Saugroboter umfahren.

In Figur 4 ist hierzu ein Flussdiagramm dargestellt. Anfänglich im Verfahrensschritt 11 führt der Saugroboter eine Explorationsfahrt in einem vorgesehenen Bodenbearbeitungsbereich durch und erstellt eine Umgebungskarte hiervon. Im Verfahrensschritt 12 bewegt sich der Saugroboter nun in seiner bekannten Umgebung, zum Beispiel um einen Reinigungsauftrag zu erfüllen. Auf die Umgebungskarte mit erkannten oder angegebenen Räumen kann der Saugroboter zugreifen. Im Verfahrensschritt 13 erkennt der Saugroboter mit seiner Sensorik ein Hindernis, beispielsweise eine Türschwelle, vor sich. Der Saugroboter prüft mithilfe seiner Umgebungskarte, ob das Hindernis in einem Türbereich liegt (Schritt 14). Liegt das Hindernis in einem Bereich zwischen zwei Räumen oder in einem vom Nutzer freigegebenen Bereich (Weg 15a), so wird das Hindernis als passierbar, beispielsweise als Türschwelle, klassifiziert. Der Saugroboter versucht im Verfahrensschritt 16a das Hindernis zu überwinden. Liegt dagegen das Hindernis innerhalb eines Raumes (Weg 15b), so wird das Hindernis als nicht passierbar, beispielsweise als Möbelstück, klassifiziert. Der Saugroboter wertet das Hindernis als solches und sucht einen Weg zur Umgehung, ohne einen Versuch des Überfahrens zu starten (Schritt 16b). Nach Überoder Umfahren des detektierten und klassifizierten Hindernisses setzt der Saugroboter im Verfahrensschritt 17 seine Bewegung und seinen Reinigungsauftrag fort.

Basierend auf der Position beziehungsweise der Lage des erkannten Hindernisses in der Umgebungskarte wird das Hindernis also klassifiziert und das weitere Vorgehen des Saugroboters entsprechend entschieden. Dadurch verringert sich das Risiko für den Saugroboter signifikant, sich auf flache Hindernisse wie beispielsweise ebenerdige Stuhlverstrebungen festzufahren. Zudem reduziert sich mit Vorteil die Gefahr, hochwertige Möbel durch ein Überfahren oder einen Überfahrensversuch zu beschädigen. Auch verringern sich die Gebrauchsspuren am Saugroboter selbst aufgrund des geringeren direkten Kontakts mit Hindernissen. Eine geringere Geräuschentwicklung und ein geringeres Risiko des Festfahrens während dem Reinigungsauftrag ermöglicht sich mit Vorteil. Insgesamt kann vorteilhafterweise die Reinigungszeit gesenkt werden, da Überwindungsversuche des Saugroboters an Hindernissen von vornherein unterbunden werden.

## Patentansprüche

1. Verfahren zur autonomen Bearbeitung von Bodenflächen mit Hilfe eines mobilen, selbstfahrenden Geräts, insbesondere Bodenreinigungsgeräts wie ein Saugroboter (4) und/oder Kehr- und/oder Wischroboter, umfassend folgende Verfahrensschritte:
- Durchführen einer Explorationsfahrt des mobilen, selbstfahrenden Geräts in einem vorgesehenen Bodenbearbeitungsbereich zum Erstellen einer Umgebungskarte (10),
- Detektieren von Hindernissen (2, 3) mittels einer Detektionseinrichtung, wobei das mobile, selbstfahrende Gerät eine Position detektierter Hindernisse (2, 3) in der Umgebungskarte (10) bestimmt,
- Klassifizieren der Hindernisse (2, 3) als passierbar oder nicht passierbar, und
- Überfahren eines als passierbar klassifizierten Hindernisses (2) und/oder Umfahren eines als nicht passierbar klassifizierten Hindernisses (3), **dadurch gekennzeichnet, dass**
- türnahe Hindernisse als Türschwelle und türferne Hindernisse als Möbel klassifiziert werden.

2. Verfahren nach Anspruch 1, wobei das Klassifizieren der Hindernisse (2, 3) anhand vorhandener, durch die Explorationsfahrt erhaltene Kartendaten erfolgt.

3. Verfahren nach Anspruch 2, wobei das Klassifizieren durch ein Abgleichen von Informationen aus der Explorationsfahrt und Informationen aus dem Detektieren des Hindernisses (2, 3) erfolgt.

4. Verfahren nach einem der vorhergehenden Ansprüche, wobei das Klassifizieren der Hindernisse (2, 3) vor einem Versuch des Überfahrens des Hindernisses (2, 3) erfolgt.

5. Verfahren nach einem der vorhergehenden Ansprüche, wobei das mobile, selbstfahrende Gerät zum Klassifizieren basierend auf Informationen aus seiner Explorationsfahrt selbsttätig Räume (1a - 1i) als solche identifiziert.

6. Verfahren nach einem der vorhergehenden Ansprüche, wobei türnahe Hindernisse überfahren und türferne Hindernisse umfahren werden, bevor ein Versuch des Überfahrens der türfernen Hindernisse durchgeführt wird.

## Claims

1. Method for autonomously processing floor surfaces with the aid of a mobile, self-propelled appliance, in particular a floor cleaning appliance such as a suction robot (4) and/or a sweeping and/or mopping robot, comprising the following method steps:
- performing an exploratory tour by the mobile, self-propelled appliance in a designated floor processing area to create a surroundings map (10),
- detecting obstacles (2, 3) by means of a detection facility, wherein the mobile, self-propelled appliance determines a position of detected obstacles (2, 3) in the surroundings map (10),
- classifying the obstacles (2, 3) as passable or not passable, and
- driving over an obstacle (2) classified as passable and/or driving around an obstacle (3) classified as not passable, **characterised in that**
- obstacles near to a door are classified as door thresholds and obstacles far from a door are classified as furniture.

2. Method according to claim 1, wherein the classification of the obstacles (2, 3) is performed with the aid of existing map data obtained by the exploratory tour.

3. Method according to claim 2, wherein the classification is performed by comparing information from the exploratory tour and information from the detection of the obstacle (2, 3).

4. Method according to one of the preceding claims, wherein the classification of the obstacles (2, 3) is performed before an attempt is made to drive over the obstacle (2, 3).

5. Method according to one of the preceding claims, wherein in order to perform the classification the mobile, self-propelled appliance automatically identifies rooms (1a-1i) as such on the basis of information from its exploratory tour.

6. Method according to one of the preceding claims, wherein obstacles near to a door are driven over and obstacles far from a door are driven around before an attempt is made to drive over the obstacles far from a door.

## Revendications

1. Procédé de traitement autonome de surfaces de sol à l'aide d'un appareil mobile automoteur, en particulier d'un appareil de nettoyage de sol comme un robot aspirateur (4) et/ou un robot balayeur et/ou essuyeur, comprenant les étapes de procédé suivantes :
- exécution d'une course d'exploration de l'appareil mobile automoteur dans une zone de traitement de sol prévue pour l'établissement d'une carte des alentours (10),
- détection d'obstacles (2, 3) au moyen d'un dispositif de détection, dans lequel l'appareil mobile automoteur détermine la position d'obstacles (2, 3) détectés dans la carte des alentours (10),
- classement des obstacles (2, 3) comme passables ou non passables et
- franchissement d'un obstacle (2) classé comme passable et/ou contournement d'un obstacle (3) classé comme non passable, **caractérisé en ce que**
- les obstacles à proximité de portes comme des seuils de porte et les obstacles éloignés d'une porte comme les meubles font l'objet d'un classement.

2. Procédé selon la revendication 1, dans lequel le classement des obstacles (2, 3) se fait à l'aide de données de carte disponibles obtenues lors de la course d'exploration.

3. Procédé selon la revendication 2, dans lequel le classement se fait par une mise au point des informations obtenues de la course d'exploration et des informations obtenues de la détection de l'obstacle (2, 3).

4. Procédé selon l'une des revendications précédentes, dans lequel le classement des obstacles (2, 3) se fait avant une tentative de franchissement de l'obstacle (2, 3).

5. Procédé selon l'une des revendications précédentes, dans lequel l'appareil mobile automoteur pour le classement identifie automatiquement comme telles des pièces (1a-1i) sur base des informations de sa course d'exploration.

6. Procédé selon l'une des revendications précédentes, dans lequel les obstacles à proximité de portes sont franchis et les obstacles éloignés des portes sont contournés, avant l'exécution d'une tentative de franchissement des obstacles éloignés des portes.
